# EUROPÄISCHE PATENTSCHRIFT

(11) **EP 0 473 207 B1**
(45) Veröffentlichungstag und Bekanntmachung des Hinweises auf die Patenterteilung: **17.05.1995**
(21) Anmeldenummer: 91118981.9
(22) Anmeldetag: 24.06.1989
(51) Int. Cl.: F16B 2/18

(54) **Spannvorrichtung**
Tightening device
Dispositif de serrage

(30) Priorität: 28.06.1988 DE 8808243 U
(43) Veröffentlichungstag der Anmeldung: 04.03.1992
(62) Teilanmeldung aus: 89111549.5
(73) Patentinhaber: Houben, Dietmar, D-42107 Wuppertal (DE)
(72) Erfinder: Houben, Dietmar, D-42107 Wuppertal (DE)
(74) Vertreter: Selting, Günther, Dipl.-Ing.

(56) Entgegenhaltungen:
- DE-A- 2 949 436
- US-A- 3 356 395
- US-A- 3 975 805

## Beschreibung

Die Erfindung betrifft eine Spannvorrichtung gemäß den Merkmalen des Oberbegriffes des Patentanspruches.
Bei einer bekannten Spannvorrichtung (DE-A-29 49 436) ist das Halteteil als C-Profil-Schiene ausgebildet und das Montageteil besteht aus einer Platte, die zentral in das C-Profil eingelegt und mit Hilfe des Exzenterstabes in einer längslaufenden Nut festgespannt ist. Wenn die Breite des Montageteiles der Breite des Hohlraumes des Halteteiles etwa entspricht - was zur Vermeidung von Querverschiebungen beider Teile relativ zueinander günstig ist, muß das Montageteil von einem Ende her axial in das Halteteil eingeschoben werden. Dies ist bei mehrere Meter langen Halteteilen, wie sie z.B. bei Dachkonstruktionen benutzt werden, umständlich und in manchen Fällen aus Platzgründen gar nicht durchführbar. Um auch in solchen Fällen die an sich günstige Spannvorrichtung mit Exzenterstab benutzen zu können, wurde die Breite des Montageteiles in bezug auf den C-Profil-Hohlraum des Halteteiles so gering bemessen, daß das Montageteil durch Schrägstellung quer in das C-Profil eingesetzt werden konnte. Da das Montageteil dabei nur geringfügig breiter als die Längsöffnung des C-Profils des Halteteiles ist, besteht die Gefahr, daß durch Montagefehler Erschütterungen oder Deformationen das Montageteil aus dem C-Profil des Halteteiles herausrutscht und die Zusammenspannung beider Teile wenigstens teilweise unwirksam wird mit nachteiligen Folgen für die Gesamtkonstruktion.

Außerdem ist es bekannt, zur Verbindung von senkrecht zueinander zusammengesteckten Rahmenteilen mit Kastenprofil eine Spannvorrichtung zu benutzen, die einen in zwei Schenkein des ersten Rahmenteils drehbar gelagerten Winkelhebel mit einem Nockenteil aufweist, der zu dem zweiten Rahmenteil quer verläuft (US-A-3 356 395). In Sperrstellung drückt der Nockenteil des Winkelhebels zwei ihm gegenüberliegende benachbarte Flächen der beiden Rahmenteile gegeneinander. An diesen beiden Flächen befinden sich quergerichtete zusammengreifende Zahnungsbereiche, die als axiale Gleitsicherung dienen. Die bekannte Vorrichtung ist nicht geeignet, gleichsinnig orientierte Teile zusammenzuspannen und gegen relative Verschiebungen zu sichern.

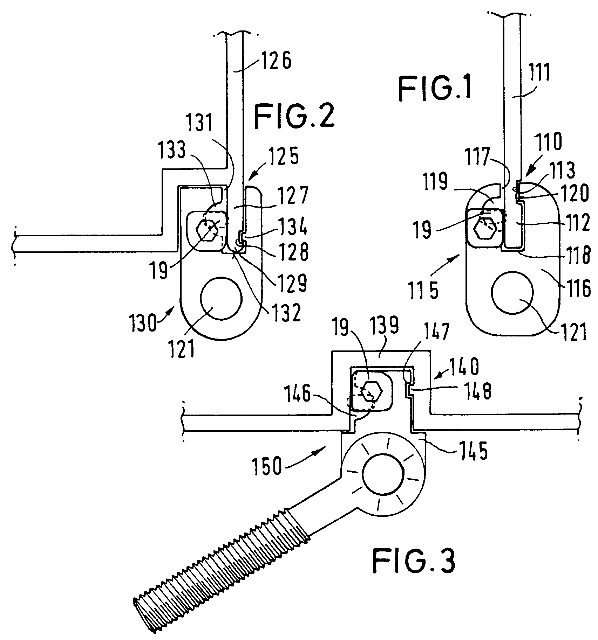

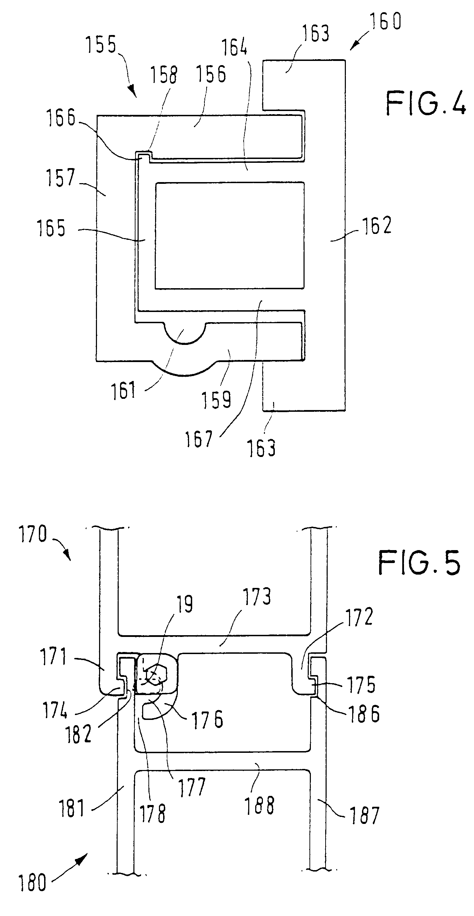

Die US-A-3 975 805 offenbart eine Spannvorrichtung mit drehbarem Klemmkörper, die nur zur Fixierung leichter Halte- bzw. Montageteile geeignet ist, die keinen Querkräften ausgesetzt werden. Dies ist einmal darauf zurückzuführen, daß keine Anschläge gegen Querverschiebung der beiden Teile relativ zueinander vorgesehen sind; zum anderen ist dies dadurch bedingt, daß die Spannvorrichtung mit einem federelastisch verformbaren Element arbeitet, das bei dem Beispiel nach Fig. 3 der aus einem längsgeschlitzten, radial nachgiebigen Metallrohr gebildete Klemmkörper selbst ist und bei dem Beispiel nach Fig. 5 durch die als federelastischer Metallbügel gestaltete eine Seite des Schlitzes gebildet wird. Bei Einwirkung von Querkräften oder erlahmender Federkraft reicht die Klemmwirkung des Klemmkörpers in beiden Fällen nicht aus und das festzuhaltende Teil rutscht haltlos aus dem Schlitz des anderen Teiles heraus.

Der Erfindung liegt die Aufgabe zugrunde, eine Spannvorrichtung mit Klemmkörper so auszubilden, daß sie schwere und/oder durch äußere Einwirkungen hochbelastete Teile zuverlässig gegen relative Querverschiebungen sichert.

Diese Aufgabe wird erfindungsgemäß dadurch gelöst, daß an der einen Seite des Schlitzes in dem einen Teil und an der benachbarten Fläche des anderen Teiles eine Rippe oder eine Kante einer komplementären Abstufung ausgebildet sind, die als Anschlag gegen Querverschiebung der beiden Teile relativ zueinander in gegenseitiger Verhakung zusammengreifen und daß die Nut zur Aufnahme eines Exzenterstabes des Klemmkörpers etwa diametral gegenüber der Rippen- und Komplementärformation parallel zu dieser verlaufend angeordnet ist.

Auf diese Weise wird erreicht, daß nicht allein die Spannkraft des Klemmkörpers für den Zusammenhalt der Teile verantwortlich ist, sondern dieser bereits weitgehend durch die gegenseitige Verhakung der Teile bewirkt wird. Der als starrer Exzenterstab gestaltete Klemmkörper sichert die Rippe des einen Teiles hinter der Kante der komplementären Abstufung des anderen Teiles durch konstante, praktisch nie erlahmende Anpreßkraft, so daß schwere und/oder durch äußere Einwirkungen hochbelastete Teile zuverlässig gegen relative Querverschiebungen gesichert sind.

Die durch die Rippe und die komplementäre Abstufung erzielte Sicherung der beiden gleichsinnig orientierten Teile gegen Querverschiebung hält das eine Teil auch dann zuverlässig fest, wenn es zur Ermöglichung der Quereinführung in ein wannenförmiges Profil des anderen Teiles verhältnismäßig schmal ist und außerdem sind vielfältige Variationen der Querschnittsprofilierung von Montageteil und Halteteil möglich, die ebenfalls ein einfaches seitliches Zusammenschieben von Montageteil und Halteteil an jeder Stelle der Teile zulassen, so daß eine wesentlich vereinfachte und schnellere Montage bei Gewährleistung ihres sicheren Zusammenhaltes nach dem Verspannen möglich ist.

Bei dieser Ausbildung befindet sich der Klemmkörper etwa diametral gegenüber der Zusammengriffstelle von Rippe und komplementärer Abstufung und spannt gegen nur ein Widerlager beide Teile zusammen. Das Teil mit der Rippe kann als hohler oder massiver Block oder als Schiene gestaltet sein und es lassen sich beliebige Aufhänge- und Befestigungsvorrichtungen konstruieren, deren Zusammenhalt durch den Zusammengriff der Rippe mit der komplementären Abstufung und den quer zu dieser Verhakung wirksamen Klemmkörper gewährleistet ist.

Vorteilhafterweise wird ein bekannter Exzenterstab verwendet, der ein Kopfstück aufweist, das im gespannten Zustand kurz hinter dem Totpunkt der Drehbewegung gegen eine gegenüberliegende Fläche anschlägt. Das Kopfstück kann mit Hilfe eines an diesem befestigten Armes betätigt werden oder es kann durch Ansetzen eines Imbusschlüssels in einen Innenmehrkant in seiner oberen Stirnseite gedreht werden.

Variationen durch geeignete Kombinationen der beanspruchten Profilformen sind im Rahmen der Erfindung realisierbar.

In der Zeichnung sind Ausführungsbeispiele der Erfindung schematisch dargestellt. Es zeigt:
Fig. 1 bis 4 vier Ausgestaltungsmöglichkeiten der Spannvorrichtung und
Fig. 5 eine Spannvorrichtung mit Doppelhalterung.

Figuren 1, 2 und 3 veranschaulichen schematische Stirnansichten von Befestigungsvorrichtungen, die beispielsweise zur Anhängung von Scharnierbolzen oder beliebigen anderen beweglichen oder unbeweglichen Bauteilen geeignet sind und mit nur einem Widerlager funktionieren. Bei dem Beispiel nach Figur 1 ist das Halteteil 110 an einer hängenden Schiene 111 vorgesehen. Im ebenen Randbereich 112 der Schiene 111 ist in ihre eine Seitenfläche eine breite Rille 113 mit rechteckigem Querschnitt eingearbeitet. Das Montageteil 115 kann aus einem beliebig geformten Block 116 gebildet sein, der in seiner oberen Hälfte etwa in seiner Längsmittelebene einen Schlitz 117 mit geschlossenem Boden 118 aufweist. Die eine Seitenwand des Schlitzes 117 bildet das Widerlager und enthält eine Nut 119 mit halbkreisförmigem Querschnitt zur Aufnahme eines Klemmkörpers 19 und die gegenüberliegende Seitenwand ist im Mündungsbereich des Schlitzes 117 mit einer der Nut 119 zugekehrten Rippe 120 versehen. Der Klemmkörper 19 ist in die Nut 119 lose eingesteckt und als Exzenterstab mit zur Drehachse nicht radialsymmetrischer Umfangsfläche gestaltet. Von dem oberen Ende des Exzenterstabes steht außerhalb der Nut 119 rechtwinklig ein Kopfstück ab, das einen Innenmehrkant zum Ansetzen eines Imbusschlüssels sowie eine Anschlagfläche aufweist. Der Exzenterstab des Klemmkörpers 19 kann im Querschnitt oval oder rund mit zwei abgeplatteten gegenüberliegenden Seiten sein. An seiner Umfangsfläche ist er im Bereich großen Durchmessers mit querverlaufenden parallelen Schneidkanten versehen. Die Schlitzbreite zwischen der Stirnfläche der Rippe 120 und dem gegenüberliegenden Rand entspricht der Dicke des Randbereiches 112, so daß das Halteteil 110 bis zum Anschlag seiner Stirnfläche gegen den geschlossenen Boden 118 des Schlitzes 117 in diesen eindringen kann. Nach Ansetzen des Montageteiles 115 wird der Klemmkörper 19 in die Nut 119 eingesteckt und gespannt. Beim Spannen drückt die Exzenterstange des Klemmkörpers 19 gegen die Rückenfläche des Randbereiches 112 und die zusammengreifenden Arretierungsvorsprünge 113, 120 werden kraftschlüssig gegeneinandergepreßt und dadurch fixiert. Die Rippe 120 greift in die Rille 113 ein, so daß das Halteteil 110 in dem Montageteil 115 arretiert ist. Unterhalb des Schlitzes 117 kann der Block 116 eine beliebig geformte Durchbrechung 121 zur Aufnahme eines beliebigen anzuhängenden Elementes haben.

Figur 2 zeigt einen Figur 1 ähnlichen Aufbau einer Spannvorrichtung . In diesem Falle ist das Halteteil 125 an einer Schiene 126 ausgebildet, die einen im Querschnitt U-förmigen Eckbereich aufweist. Das U-Profil nimmt eine Hälfte eines Montageteiles 130 auf. Am freien Ende eines Schenkels 127 des U-Profils ist auf seiner nach außen gewandten Fläche eine längsverlaufende Rille 128 mit rechteckigem Querschnitt ausgebildet, die eine Hakenprofilierung 129 mit abgerundeter Stirnfläche am Ende des Schenkels 127 erzeugt. Das blockartige Montageteil 130 weist einen Schlitz 131 mit geschlossenem Boden 132 auf, der parallel zur Längsmittelebene neben dieser vorgesehen ist. Die eine Wand des Schlitzes dient als Widerlager und ist mit einer halbkreisförmigen Nut 133 ausgerüstet, die der Klemmkörper 19 aufnimmt und die andere Wand ist mit einer über ihre Fläche nach innen vorspringenden Rippe 134 versehen, die der Rille 128 des Halteteiles 125 angepaßt ist und in diese eindringt, wenn der Klemmkörper 19 gespannt wird. Gegen den Schenkel 127 der Schiene 126 wird in verspanntem Zustand die Rückenfläche des blockartigen Montageteiles 130 angedrückt, so daß er als Widerlager wirksam ist und den Gesamtaufbau stabilisiert.

In ein U-Profil 139 eines Halteteiles 140 ist bei dem Beispiel nach Figur 3 ein Block 145 eines Montageteiles 150 eingesetzt. Der Block 145 mit etwa rechteckigem Querschnitt ist auf einer Seite mit einer halbkreisförmigen Nut 146 zur Aufnahme des Klemmkörpers 19 versehen und auf der gegenüberliegenden Seite mit einer längslaufenden Rille 147 rechteckigen Querschnittes ausgestattet. In montiertem Zustand greift eine längslaufende Rippe 148 auf der Innenfläche einer Wand des U-Profils 139 des Halteteiles 140 in die Rille 147 ein, wenn der Klemmkörper 19 gegen die als Widerlager dienende gegenüberliegende Wand des Halteteiles 140 angezogen ist und die Teile 140, 150 zusammengespannt sind.

Figur 4 ähnelt dem Beispiel nach Figur 3. Ein im Querschnitt U-förmiges Montageteil 155 ist auf der Innenfläche seiner einen Wand 156 im Bereich der geschlossenen Wand 157 mit einer längslaufenden Rille 158 versehen und weist auf der Innenfläche der gegenüberliegenden Wand 159 in etwas größerem Abstand zur geschlossenen Wand 157 eine halbkreisförmige Nut 161 zur Aufnahme des Klemmkörpers 19 auf. Das Halteteil 160, das an einer beliebigen, z.B. senkrechten Trägerkonstruktion befestigt sein kann, ist als länglicher Profilkörper ausgebildet, der eine Platte 162 mit nach der gleichen Seite abstehenden Randflanschen 163 und einem längsverlaufenden rechteckigen Mittelaufbau 164 gebildet ist. Der Mittelaufbau 164 schließt mit den beiden Flanschen 163 je einen breiten Kanal ein, in den die Wände 156 und 159 des Montageteiles 155 hineinragen. An dem der Platte 162 des Halteteiles 160 parallel gegenüberliegenden Wandteil 165 des Mittelaufbaus 164 befindet sich eine seitwärts weisende Rippe 166, die in die Rille 158 paßt, wenn Halteteil 160 und Montageteil 155 wie in der Zeichnung veranschaulicht zusammengesteckt sind. Nach Verspannen des Klemmkörpers 19 in der Nut 161 gegen die benachbarte Wand 167 des Mittelaufbaus 164 wird die Rippe 166 in die Rille 158 gepreßt und die Wand 159 wird von der benachbarten Wand 167 des Mittelaufbaus 164 weggedrückt, so daß sie als Druckauflager gegen den unteren Flansch 163 angepreßt wird. Die gesamte Anordnung ist hoch belastbar.

Bei dem Beispiel der Figur 5 wird das Prinzip des Beispiels nach Figur 1 abgewandelt übernommen. Ein Halteteil 170 ist mit zwei parallelen senkrecht nach unten hängenden Schienen 171, 172 versehen, die durch eine waagerechte Wand 173 miteinander verbunden sind. Jede Schiene 171, 172 weist eine Rippe 174, 175 auf und beide Rippen sind in die gleiche Richtung gewandt. An der Unterseite der Wand 173 des Halteteiles 170 ist in der Nähe der Schiene 171, jedoch mit Abstand zu dieser, ein längslaufender Profilstrang 176 vorgesehen, der eine halbkreisförmige Nut 177 bildet, die gegen die Rippe 174 offen ist und den Klemmkörper 19 aufnimmt. Zwischen dem Profilstrang 176 und der Stirnfläche der Rippe 174 verbleibt in ungespanntem Zustand der Anordnung ein Schlitz 178, durch den eine Schiene 181 eines Montageteiles 180 so einführbar ist, daß die Rippe 174 in eine Rille 182 mit rechteckigem Querschnitt eingreift, wenn der Klemmkörper 19 etwa diametral gegenüber von Rille 182 und Rippe 174 gegen die Rückenfläche der Schiene 181 gespannt ist. Zur Stabilisierung greift auch die Rippe 175 der Schiene 172 in eine rechteckige Rille 186 der Schiene 187 des Montageteiles 180 ein. Die beiden Schienen 181 und 187 des Montageteiles 180 sind durch eine Wand oder einen Steg 188 miteinander verbunden.

## Patentansprüche

1. Spannvorrichtung mit einem Halteteil (110) und einem Montageteil (115), bei der das Halteteil (110) oder das Montageteil (115) einen Schlitz (117) mit einander gegenüberliegenden, starren Seiten und geschlossenem Boden aufweist, in den das andere Teil einführbar ist und bei der ein in einer längslaufenden Nut (119) des einen Teiles versenkter, drehbarer Klemmkörper (19) beide Teile gegen Widerlager verspannt,
**dadurch gekennzeichnet**,
daß an der einen Seite des Schlitzes (117) in dem einen Teil und an der benachbarten Fläche des anderen Teiles eine Rippe (120) oder eine Kante einer komplementären Abstufung (113) ausgebildet sind, die als Anschlag gegen Querverschiebung der beiden Teile relativ zueinander in gegenseitiger Verhakung zusammengreifen,
und daß die Nut (119) zur Aufnahme eines Exzenterstabes des Klemmkörpers (19) etwa diametral gegenüber der Rippen- und Komplementärformation parallel zu dieser verlaufend angeordnet ist.

## Claims

1. A tightening device, comprising a holding member (110) and a mounting member (115), wherein the holding member (110) or the mounting member (115) comprises a slot (117) having rigid sides being opposed to each other and a closed bottom, into which the other member is introducible, and wherein a rotatable clamping body (19) sunk in a longitudinally extending groove (119) of the one member clamps both members against abutments,
**characterized in**
that, on the one side of the slot (117) in the one member and on the adjacent surface of the other member, a rib (120) or an edge of a complementary step (113) are configured, which engage with each other in mutual interlock as stop against transverse displacement of both members relative to each other,
and that the groove (119) for receiving an eccentric rod of the clamping body (19) is arranged about diametrically opposite the rib and complementary formation and extends parallel thereto.

## Revendications

1. Dispositif de serrage comprenant une pièce de maintien (110) et une pièce de montage (115), dans lequel la pièce de maintien (110) ou la pièce de montage (115) présente une fente (117) ayant des côtés rigides se faisant vis-à-vis et un fond fermé, dans laquelle l'autre pièce peut être introduite, et dans lequel un corps de blocage (19) rotatif enfoncé dans une rainure longitudinale (119) de la première des pièces serre les deux pièces contre une butée, caractérisé en ce que, sur l'une des faces de la fente (117) dans la première des pièces et sur la surface adjacente de l'autre pièce, sont formées une nervure (120) ou une arête de décalage complémentaire (113), lesquelles, en tant que butée empêchant un déplacement transversal des deux pièces l'une par rapport à l'autre, sont engagées l'une avec l'autre en verrouillage mutuel, et en ce que la rainure (119) destinée à recevoir une tige d'excentrique du corps de blocage (19) est placée approximativement en position diamétralement opposée à la formation avec nervure et complémentaire, parallèlement à celle-ci.
